# EUROPEAN PATENT APPLICATION

(11) **EP 2 012 286 A2**
(43) Date of publication of application: **07.01.2009**
(21) Application number: 08104627.8
(22) Date of filing: 03.07.2008
(51) Int. Cl.: G08B 21/06

(54) **Apparatus, method and program for detecting act of looking aside**

(30) Priority: 04.07.2007 JP 2007175780
(71) Applicant: Omron Corporation, Kyoto-shi, Kyoto 600-8530 (JP)
(72) Inventor: Matsuoka, Miki, c/o OMRON CORP., 801 c/o OMRON CORP.,801, Minamifudodo-cho, Kyoto-shi, Kyoto 600-8530 (JP); Ando, Tanichi, c/o OMRON CORP., 801, Minamifudodo-cho, Kyoto-shi, Kyoto 600-8530 (JP)
(74) Representative: Brykman, Georges

(57) **Abstract**

More accurate detection of an act of looking aside is to be achieved. A direction-of-face detection unit detects the orientation of face of a driver, and a direction-of-sight line detection unit detects the orientation of sight line of the driver, based on an image photographed by the photographing unit. A field-of-view detection unit uses the sight line orientation of the driver as a reference to detect a range depending on the difference between the face orientation and sight line orientation of the driver as the field of view of the driver. A judging unit judges that the act of looking aside is going on when the face orientation of the driver is out of the face orientation-judging range. Also, the judging unit judges based on the driver's field of view whether or not the driver is looking aside when the face orientation of the driver is within the face orientation-judging range. The invention is applicable to an apparatus for detecting an act of looking aside by a driver.

## Description

### BACKGROUND OF THE INVENTION

### 1. Field of the Invention

The present invention relates to an apparatus, a method and a program for detecting an act of looking aside. Particularly, it relates to an apparatus, a method and a program for detecting an act of looking aside, which enable more accurate detection of the act of looking aside.

### 2. Description of Related Art

In recent years, accidents occur frequently because drivers look aside while driving. Therefore, a technique to detect the act of looking aside by a driver and issue a warning against the act of looking aside has been developed.

It has been proposed to actuate an alarm when the time depending on the running speed of a car has elapsed, for example, in the condition where at least one of the sight line orientation and face orientation of a driver is not fit to a running direction (see e.g. JP-A-2003-317197 (Patent Document 1)).

However, with the invention disclosed in Patent Document 1, when the face of a driver is not angled in the running direction even with the sight line angled in the running direction, an alarm is actuated, causing the driver to feel inconvenience.

### SUMMARY OF THE INVENTION

The invention was made in consideration of such circumstances, which aims to achieve more accurate detection of the act of looking aside.

An apparatus for detecting an act of looking aside according to an aspect of the invention includes: a field-of-view detection means for detecting a first range as a field of view of a person with respect to an orientation of a sight line of the person; and a judging means for judging whether or not the person is looking aside, based on the detected field of view of the person.

In the apparatus for detecting an act of looking aside according to an aspect of the invention, the first range with respect to the orientation of the sight line of the person is detected as the field of view of the person, and a judgment is made on whether or not the person is looking aside, based on the detected person's field of view.

Therefore, an act of looking aside can be detected more accurately.

The field-of-view detection means and judging means are constituted by e.g. a CPU (Central Processing Unit).

The field-of-view detection means can be arranged to adjust the breadth of the first range according to the extent of difference between the face orientation and the sight line orientation of the person.

Thus, an act of looking aside can be detected more accurately.

The field-of-view detection means can be arranged to adjust the breadth of the first range according to the speed of a vehicle which the person is driving.

The judging means can be arranged to judge that the person is looking aside regardless of the sight line orientation and field of view of the person when the face orientation of the person with respect to a predetermined reference direction in a horizontal direction is beyond a second range.

Thus, an act of looking aside can be detected quickly.

A method or program for detecting an act of looking aside according to an aspect of the invention includes: a field-of-view detection step for detecting a predetermined range as a field of view of a person with respect to an orientation of a sight line of the person; and a judging step for judging whether or not the person is looking aside, based on the detected field of view of the person.

In the method or program for detecting an act of looking aside according to an aspect of the invention, the first range with respect to the orientation of the sight line of the person is detected as the field of view of the person, and a judgment is made on whether or not the person is looking aside, based on the detected person's field of view.

Thus, an act of looking aside can be detected more accurately.

The field-of-view detection step is configured e.g. by a step of detecting a predetermined range with respect to the sight line orientation of a person as the field of view of the person by means of CPU. The judge step is configured e.g. by a step of judging whether or not the person is looking aside, based on e.g. the detected field of view of the person by means of CPU.

As stated above, according to an aspect of the invention, the act of looking aside can be detected. Particularly, according to an aspect of the invention, the act of looking aside can be detected more accurately.

### BRIEF DESCRIPTION OF THE DRAWINGS

Fig. 1 is a block diagram showing an embodiment of the driving-support apparatus to which the invention is applied.
Fig. 2 is a flowchart for explaining a driving-support process executed by the driving-support apparatus.
Fig. 3 is an illustration for explaining an example of judgment of the act of looking aside.
Fig. 4 is an illustration for explaining an example of judgment of the act of looking aside.
Fig. 5 is an illustration for explaining an example of judgment of the act of looking aside.
Fig. 6 is an illustration for explaining an example of judgment of the act of looking aside.
Fig. 7 is an illustration for explaining an example of judgment of the act of looking aside.
Fig. 8 is a block diagram showing an example of the configuration of a personal computer.

### DESCRIPTION OF THE PREFERRED EMBODIMENTS

Now, the embodiments of the invention will be described below with reference to the drawings.

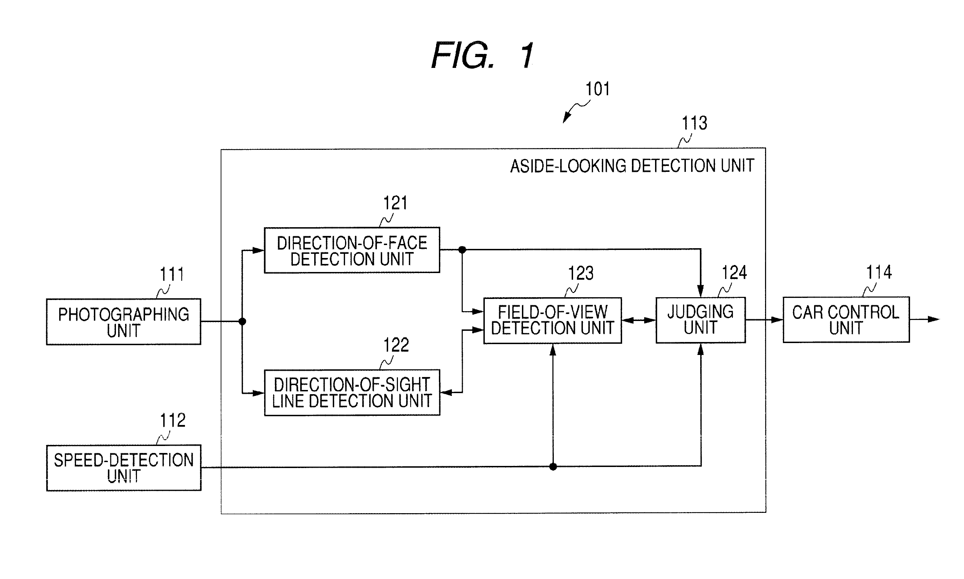

Fig. 1 is a block diagram showing an embodiment of the driving-support apparatus to which the invention is applied. The driving-support apparatus 101 performs a process for detecting the act of looking aside by a driver driving a car (also hereinafter referred to as "automobile") equipped with the driving-support apparatus 101, and controls an onboard device provided on the automobile so that a process to cope with the act of looking aside is performed when the act of looking aside by a driver is detected. The driving-support apparatus 101 includes: a photographing unit 111; a speed-detection unit 112; an aside-looking detection unit 113; and a car control unit 114.

The photographing unit 111 is composed of e.g. a camera, and photographs the face of a driver substantially from the front direction. The photographing unit 111 supplies an image including the photographed driver's face (hereinafter referred to "face image") to a direction-of-face detection unit 121 and a direction-of-sight line detection unit 122 in the aside-looking detection unit 113.

The speed-detection unit 112 is composed of e.g. a speed sensor, and detects the speed of the automobile. The speed-detection unit 112 supplies an information piece showing the detected automobile speed to a field-of-view detection unit 123 and a judging unit 124 in the aside-looking detection unit 113.

The aside-looking detection unit 113 performs a process for detecting the act of looking aside by the driver. The aside-looking detection unit 113 includes the direction-of-face detection unit 121, the direction-of-sight line detection unit 122, the field-of-view detection unit 123, and the judging unit 124.

The direction-of-face detection unit 121 uses a predetermined technique to detect the orientation of face of the driver based on the face image. The direction-of-face detection unit 121 supplies an information piece showing the face orientation of the driver to the field-of-view detection unit 123 and the judging unit 124. Now, the technique which the direction-of-face detection unit 121 uses to detect the orientation of face is not limited to a particular one. It is preferable to adopt a technique which enables quicker and more reliable detection of the orientation of face.

The direction-of-sight line detection unit 122 uses a predetermined technique to detect the orientation of sight line of the driver based on the face image. The direction-of-sight line detection unit 122 supplies the field-of-view detection unit 123 with an information piece showing the orientation of sight line of the driver. Now, the technique which the direction-of-sight line detection unit 122 uses to detect the orientation of sight line is not limited to a particular one. It is preferable to adopt a technique which enables quicker and more reliable detection of the orientation of sight line.

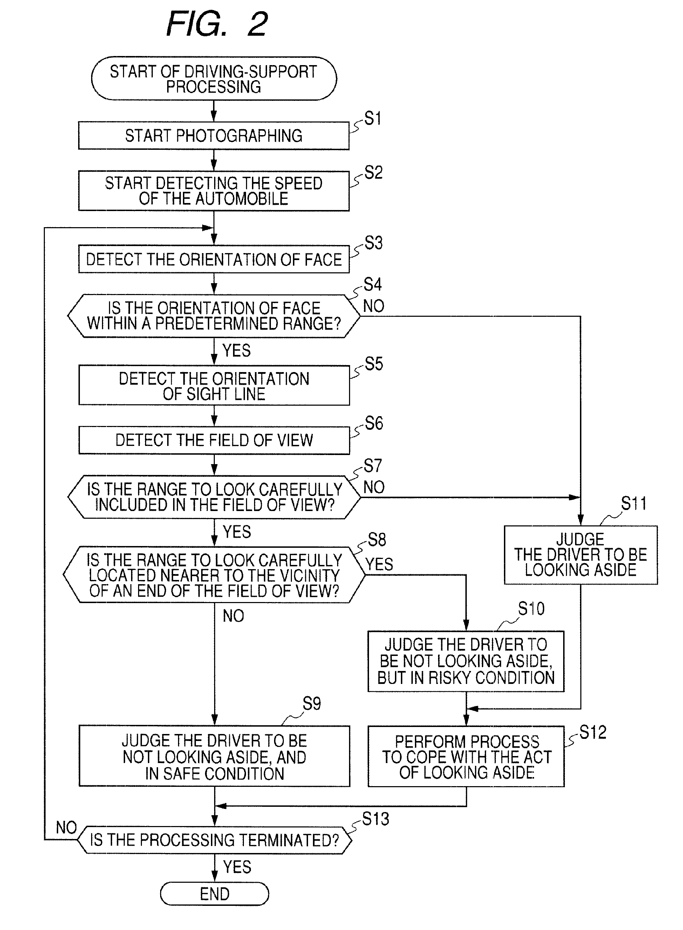

The field-of-view detection unit 123 directs the direction-of-sight line detection unit 122 to detect the sight line orientation of the driver if required. Also, the field-of-view detection unit 123 detects the field of view of the driver based on the orientations of face and sight line of the driver and the speed of the automobile, as described later with reference to Fig. 2. The field-of-view detection unit 123 supplies an information piece showing the detected driver's field of view to the judging unit 124.

The judging unit 124 directs the field-of-view detection unit 123 to detect the field of view of the driver, if required. The judging unit 124 judges based on the face orientation of the driver, the field of view of the driver and the speed of the automobile: whether or not the driver is looking aside; and whether or not the condition is risky on condition that the driver is not looking aside as described later with reference to Fig. 2. The judging unit 124 supplies an information piece showing the results of the judgments to the car control unit 114.

The car control unit 114 is composed of e.g. an ECU (Electronic Control Unit). When the act of looking aside by the driver is detected, or a risky condition is detected, the car control unit 114 controls the onboard device provided on the automobile so that a process to cope with such situation is performed.

The orientations of the face and sight line of the driver in a horizontal direction will be represented hereinafter by angles using the front of the automobile as a reference direction. Specifically, the reference direction is set to zero degree; an angle of a left direction with respect to the reference direction is represented by a negative value, and an angle of a right direction with respect to the reference direction is represented by a positive value. For instance, the direction at 30 degrees on the left with respect to the reference direction is represented by -30 degrees, and the direction at 30 degrees on the right with respect to the reference direction is represented by +30 degrees.

Likewise, when a certain direction is made a reference one, an angle of a left direction with respect to the direction making a reference is represented by a negative value, and an angle of a right direction with respect to the direction making the reference is represented by a positive value, hereinafter. For instance, when the face orientation of the driver is adopted as a reference, the direction of 30 degrees on the left with respect to the face orientation of the driver is represented by -30 degrees, and the direction of 30 degrees on the right with respect to the reference direction is represented by +30 degrees.

Now, driving-support processing executed by the driving-support apparatus 101 will be described with reference to the flowchart of Fig. 2. Incidentally, the processing is started e.g. when the engine of the automobile is activated.

In Step S1, the photographing unit 111 starts photographing. Specifically, the photographing unit 111 starts to photograph the face of a driver, and starts supplying the photographed face image to the direction-of-face detection unit 121 and the direction-of-sight line detection unit 122.

In Step S2, the speed-detection unit 112 starts to detect the speed of the automobile, and starts to supply an information piece showing the detected speed to the field-of-view detection unit 123 and the judging unit 124.

In Step S3, the direction-of-face detection unit 121 detects the orientation of face. Specifically, the direction-of-face detection unit 121 detects the face orientation of the driver based on the face image, and supplies an information piece showing the detected orientation of face to the field-of-view detection unit 123 and the judging unit 124.

In Step S4, the judging unit 124 judges whether or not the orientation of face is within a predetermined range (hereinafter referred to as "face orientation-judging range").

Herein, the face orientation-judging range refers to a range of the orientation of face making a reference to judge whether or not the driver is looking aside. When the face orientation of the driver is out of the face orientation-judging range, the judging unit 124 judges that the driver is looking aside.

An example of the face orientation-judging range will be described later.

When in Step S4 the orientation of face is judged to be within the face orientation-judging range, the processing proceeds to Step S5.

In Step S5, the direction-of-sight line detection unit 122 detects the orientation of sight line. Specifically, the judging unit 124 directs the field-of-view detection unit 123 to detect the field of view of the driver. The field-of-view detection unit 123 directs the direction-of-sight line detection unit 122 to detect the sight line orientation of the driver. The direction-of-sight line detection unit 122 detects the sight line orientation of the driver based on the face image, and supplies an information piece showing the detected orientation of sight line to the field-of-view detection unit 123.

In Step S6, the field-of-view detection unit 123 detects the field of view. Specifically, the field-of-view detection unit 123 detects, as a driver's field of view, a predetermined range with respect to the sight line orientation of the driver in a horizontal direction (hereinafter referred to as "field-of-view range").

In *"*DORAIBA HENO KIKEN NINCHI-SIEN-HOUHOU NI KANSURU KENKYU (A Study on Method of Warning Cognition to a Car Driver) by Hajime Takada et al. in Collection No. 4-06 of proceedings of Academic lecture meeting in Japan, Society of Automotive Engineers of Japan, Inc., May 2006, pp. 11-16" (hereinafter referred to as Cited Reference 1) is reported the experimental result that the time required for a driver to recognize the emission light of an LED (Light Emitting Diode) shows no remarkable difference owing to the differences in display position, color and LED diameter when the LED display position is within a range between 20 degrees on the left and 20 degrees on the right with respect to the front direction of the driver, whereas when the display position is beyond the range, it shows a remarkable difference depending on the differences in display position, color and LED diameter.

For instance, based on the experimental results, it is possible as an example of the field-of-view range to set a range of -20 to +20 degrees with respect to the sight line orientation of the driver as the center.

Further, when there is a large difference between the orientation of face and the orientation of sight line, the field of view of humans is narrowed owing to the influence of the nose. Therefore, the breadth of the field-of-view range may be adjusted according to the extent of the difference between the orientation of face and the orientation of sight line. For instance, when the extent of the difference between the face orientation and sight line orientation of the driver in the horizontal direction is 5 degrees or larger, the field-of-view range may be set to a range of -15 to +15 degrees with respect to the sight line orientation of the driver as the center. Alternatively, in consideration of the fact the nose narrows the field of view mainly, the field-of-view range may be set to a range of -20 to +10 degrees with respect to the sight line orientation of the driver when the driver's sight line strays off the orientation of the face in the left direction in the case where the extent of the difference between the face orientation and sight line orientation of the driver in the horizontal direction is 5 degrees or larger; when the driver's sight line strays off the orientation of the face in the right direction, the field-of-view range may be set to a range of -10 to +20 degrees with respect to the sight line orientation of the driver. In addition, the breadth of the field-of-view range may be adjusted more finely according to the difference between the orientations of the face and sight line.

Alternatively, the breadth of the field-of-view range may be adjusted according to the speed of an automobile because the driver's field of view is narrowed with an increase in the speed of an automobile. For instance, the field-of-view range may be set to: a range of -50 to +50 degrees with respect to the sight line orientation of the driver as the center when the speed of the automobile is 40 km per hour or below; a range of -32 to +32 degrees with respect to the sight line orientation of the driver as the center in the case of 70 km per hour or below; a range of -20 to +20 degrees with respect to the sight line orientation of the driver as the center in the case of 100 km per hour or below; and a range of -10 to +10 degrees with respect to the reference direction as the center in the case of above 100 km per hour.

Now, the examples of the case of setting the field-of-view range to a range of -20 to +20 degrees with respect to the sight line orientation of the driver as the center when the extent of the difference between the face orientation and sight line orientation of the driver in the horizontal direction is smaller than 5 degrees and the case of setting the field-of-view range to a range of -15 to +15 degrees with respect to the sight line orientation of the driver as the center when the extent of the difference between the face orientation and sight line orientation of the driver in the horizontal direction is 5 degrees or larger will be described below.

The field-of-view detection unit 123 supplies the judging unit 124 with an information piece showing the detected driver's field of view.

In Step S7, the judging unit 124 judges whether or not a range to look carefully is included in the field of view. When a predetermined range set as the range which the driver should look to carefully while driving is included in the driver's field of view detected by the field-of-view detection unit 123, the judging unit 124 judges that the range to look carefully is included in the field of view, and the processing proceeds to Step S8. Hereinafter, a range of -10 to +10 with respect to the reference direction shall be set as the range which the driver should look to carefully while driving.

In Step S8, the judging unit 124 judges whether or not the range to look carefully is located nearer to the vicinity of an end of the field of view. Specifically, when the range to look carefully falls in neither a predetermined range in the right direction with respect to the left end of the driver' s field of view (hereinafter referred to as "left end field-of-view range"), nor a predetermined range in the left direction with respect to the right end of the field of view (hereinafter referred to as "right end field-of-view range"), the judging unit 124 judges that the range to look carefully is not located nearer to the vicinities of the ends of the field of view, and the processing proceeds to Step S9.

Now, an example in which the left end field-of-view range is defined as a range extending from the left end of the driver' s field of view to 20 degrees in the right direction, and the right end field-of-view range is defined as a range extending from the right end of the driver' s field of view to 20 degrees in the left direction will be described below.

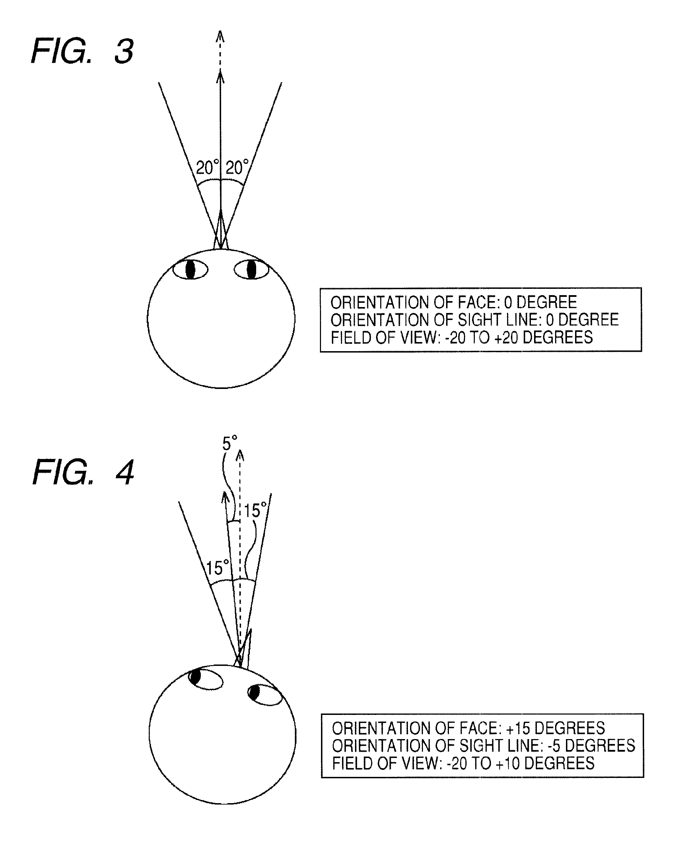

Fig. 3 shows examples of orientations of the face and sight line of the driver, in which the broken-line arrow represents a reference direction, i.e. the forward direction of the automobile, the solid-line arrow represents the orientation of the sight line. Also, in Figs. 4 to 7, to which reference will be made later, the broken-line arrow represents the reference direction, and the solid-line arrow represents the orientation of the sight line.

For instance, when driver' s face is angled in a direction of 0 degree, and the sight line of the driver is angled in a direction of 0 degree as shown in Fig. 3, a range of -20 to +20 degrees makes the driver's field of view. In this case, the range to look carefully, -10 to +10 degrees, falls in neither a range of -20 to 0 degrees, which is the left end field-of-view range, nor a range of 0 to +20 degrees, which is the right end field-of-view range. Therefore, it is judged that the range to look carefully is not located nearer to the vicinity of an end of the field of view, and the processing proceeds to Step S9.

In Step S9, the judging unit 124 judges that the driver is not looking aside, and the condition is safe. The judging unit 124 supplies the car control unit 114 with an information piece showing that the driver is not looking aside and the condition is safe. After that, the processing proceeds to Step S13.

However, in Step S8, when the range to look carefully falls in at least one of the left end field-of-view range and the right end field-of-view range, the judging unit 124 judges that the range to look carefully is located nearer to the vicinity of an end of the field of view, and the processing proceeds to Step S10.

For instance, when driver' s face is angled in a direction of +15 degrees, and the sight line of the driver is angled in a direction of -5 degrees as shown in Fig. 4, a range of -20 to +10 degrees makes the driver's field of view. In this case, the range to look carefully, -10 to +10 degrees, falls in a range of -10 to +10 degrees, which is the right end field-of-view range, and therefore it is judged that the range to look carefully is located nearer to the vicinity of the right end of the field of view, and the processing proceeds to Step S10.

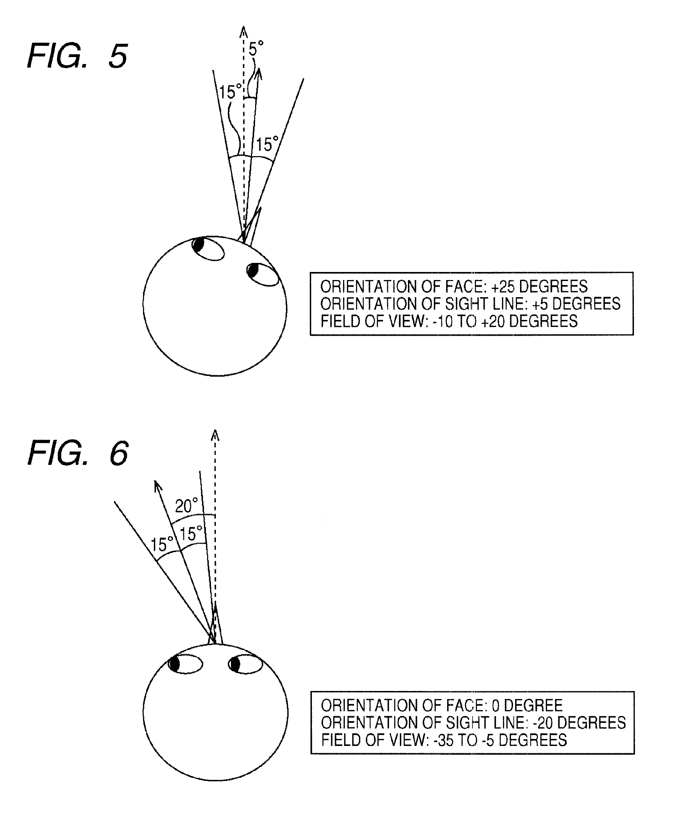

In addition, for instance, when driver's face is angled in a direction of +25 degrees, and the sight line of the driver is angled in a direction of +5 degrees as shown in Fig. 5, a range of -10 to +20 degrees makes the driver's field of view. In this case, the range to look carefully, -10 to +10 degrees, falls in a range of -10 to +10 degrees, which is the left end field-of-view range, and therefore it is judged that the range to look carefully is located nearer to the vicinity of the left end of the driver' s field of view, and the processing proceeds to Step S10.

In Step S10, the judging unit 124 judges that the driver is not looking aside, but the condition is risky. The humans' eyesight becomes lower at a point nearer to an end of the field of view. Therefore, when the range to look carefully is located nearer to the vicinity of an end of the driver' s field of view, the judging unit 124 judges that the driver is not looking aside, however the condition is risky because there is a high probability that the range to look carefully is not in sight sufficiently. The judging unit 124 supplies the car control unit 114 with an information piece showing that the driver is not looking aside, however the condition is risky. After that, the processing proceeds to Step S12.

On the other hand, in Step S7, when it is judged that the range to look carefully does not fall in the field of view, the processing proceeds to Step S11.

For instance, when driver' s face is angled in a direction of 0 degree, and the sight line of the driver is angled in a direction of -20 degrees as shown in Fig. 6, a range of -35 to -5 degrees makes the driver's field of view. In this case, it is judged that the range to look carefully, -10 to +10 degrees, does not fall in the driver' s field of view, and the processing proceeds to Step S11.

In Step S11, the judging unit 124 judges that the act of looking aside is going on. The judging unit 124 supplies the car control unit 114 with an information piece showing that the driver is looking aside.

In Step S4, when it is judged that the orientation of the face is out of the face orientation-judging range, the processing proceeds to Step S11. In Step S11, regardless of the orientations of the sight line and field of view of the driver, it is judged that the act of looking aside is going on.

Incidentally, in *"*DORAIBA NO KAONOMUKI NIYORU ZENPOHUCHUSHI NO SUITEI TO KEIHO-HANNOJIKAN NO KENKYU (Study on Estimation that the Driver's Attention is not in Forward by using Face Orientation and Reaction Time to Warning) by Satoshi Nakagoshi et al. in Collection No. 58-06 of proceedings of Academic lecture meeting in Japan, Society of Automotive Engineers of Japan, Inc., May 2006, pp. 17-20" (hereinafter referred to as Cited Reference 2) is reported the experimental result that when the angle of an object that a driver is looking carefully exceeds 20 degrees on the right and left, the angle of the orientation of face is beyond the angle of the ocular movement, and therefore the driver shows a more remarkable tendency to move his or her face.

For instance, based on this experimental results, assuming the maximum value of the difference between the face orientation and sight line orientation of the driver to be 20 degrees, when driver's face is angled in a direction on the left of -25 degrees, the sight line orientation of the driver represents a direction on the left of -5 degrees, and the driver's field of view is made a range in a direction on the left of +10 degrees. Hence, when driver's face is angled in a direction on the left of -25 degrees, a range of -10 to +10 degrees, which is the range to look carefully, does not fall in the driver's field of view. Likewise, when driver's face is angled in a direction on the right of +25 degrees, the sight line orientation of the driver represents a direction on the right of +5 degrees, and the driver's field of view is made a range in a direction on the right of -10 degrees. Hence, when driver's face is angled in a direction on the right of +25 degrees, a range of -10 to +10 degrees, which is the range to look carefully, never falls in the driver's field of view.

Therefore, as an example of the face orientation-judging range, it is possible to set a range of -25 to +25 degrees with respect to the reference direction.

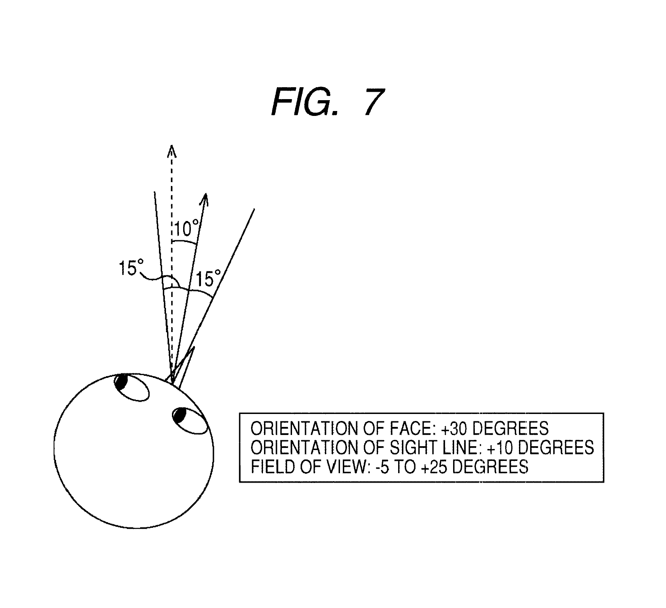

In this case, for instance, when driver' s face is angled in a direction of +30 degrees as shown in Fig. 7, the face orientation of the driver does not fall in the face orientation-judging range, and therefore it is judged that the act of looking aside is going on. Incidentally, in the case where driver's face is angled in a direction of +30 degrees, it is expected according to the experimental results shown in Cited Reference 2 that the sight line orientation of the driver is up to +10 degrees even if the sight line is angled in the leftmost direction, and therefore the driver's field of view is expected to be a range of -5 to +25 degrees even if it is located leftmost. That is, it is expected that when driver's face is angled in a direction of +30 degrees, the range to look carefully does not fall in the field of view even if the driver' s sight line is angled in the leftmost direction.

In Step S12, the car control unit 114 performs a process to cope with the act of looking aside. For instance, when the driver remains looking aside for a predetermined first time or longer, or when the driver is not looking aside, however a risky condition continues for a second predetermined time or longer, which is longer than the first time, the car control unit 114 makes a display device provided in the automobile display a warning picture to alert the driver, and causes a speaker provided in the automobile to output an alarm to alert the driver.

In Step S13, the driving-support apparatus 101 judges whether or not to terminate the processing. When it is judged that the processing is not terminated, the processing is returned back to Step S3. Until it is judged that the processing is to be terminated in Step S13, the processes in Step S3 to S13 are executed repeatedly.

However, in Step S13, for instance, when the engine of the automobile is stopped, the driving-support apparatus 101 judges that the processing is to be terminated, and the driving-support processing is terminated.

As described above, by using not only orientations of the face and sight line of the driver, but also driver' s field of view to detect the act of looking aside, it is made possible to detect the act of looking aside more accurately.

Further, in the embodiment of the invention, a related-art technique can be used as the technique to detect the orientation of face and the orientation of sight line, and the needs for additionally performing a complicated process is eliminated. Therefore, the accuracy of detecting the act of looking aside can be increased readily.

In the above description, the example of detecting the act of looking aside by the driver driving a car is shown. However, in addition to the above-described example, the invention is also applicable to e.g. detection of the act of looking aside by persons who need to carefully look to a predetermined direction, such as persons driving or operating various types of vehicles e.g. electric railcars, aircrafts and watercraft, persons operating machines including a working machine.

When judging whether or not the driver is looking aside, the time during which the face is faced to outside the face orientation-judging range, or the time during which the condition that a range to look carefully is not included in the field of view continues may be considered. In that case, the time used for the judgment may be adjusted according to e.g. the speed of the automobile or the orientation of the face or sight line.

Further, in the embodiment of the invention, the technique to detect the orientations of face and sight line are not limited to the one which uses an image, and it may be the one which uses e.g. a sensor attached to the head of a driver to detect the orientations.

The above-described processes in a series may be executed by software as well as hardware. In the case of executing the series of processes by software, a program constituting the software is installed from a medium with the program recorded thereon to a computer incorporated in a dedicated piece of hardware, or a multipurpose personal computer, which can execute various kinds of functions when various kinds of programs are installed thereto, for example.

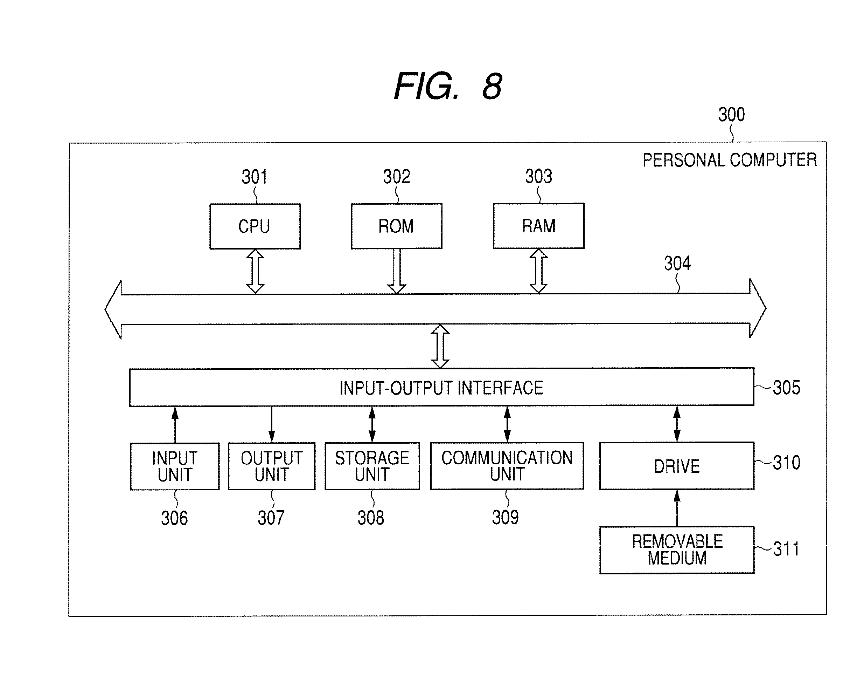

Fig. 8 is a block diagram showing an example of the hardware configuration of a computer which executes the series of processes as described above according to the program.

In the computer, a CPU (Central Processing Unit) 301, a ROM (Read Only Memory) 302, and a RAM (Random Access Memory) 303 are connected through a bus 304 mutually.

To the bus 304, an input-output interface 305 is connected. To the input-output interface 305 are connected: an input unit 306 composed of a keyboard, a mouse, a microphone, etc. ; an output unit 307 composed of a display, a speaker, etc. ; a storage unit 308 composed of a hard disc, a nonvolatile memory, etc.; a communication unit 309 composed of a network interface, etc.; and a drive 310 for driving a removable medium 311 such as a magnetic disc, an optical disc, a magneto-optical disc or a semiconductor memory.

In a computer configured as described above, the CPU 301 loads the program stored in e.g. the storage unit 308 into the RAM 303 through the input-output interface 305 and the bus 304 and runs the program, whereby the series of processes as described above is performed.

The program which the computer (CPU 301) runs is recorded on and offered by the removable medium 311, which is a package medium composed of e.g. a magnetic disc (including a flexible disc), an optical disc (CD-ROM (Compact Disc-Read Only Memory), DVD(Digital Versatile Disc), etc.), a magneto-optical disc, or a semiconductor memory, otherwise offered through a wired or wireless transmission medium such as a local area network, the Internet or digital satellite broadcasting.

The program can be installed to the storage unit 308 through the input-output interface 305 by setting the removable medium 311 in the drive 310. Also, the program can be received with the communication unit 309 through a wired or wireless transmission medium, and installed to the storage unit 308. Otherwise, the program may be previously installed to the ROM 302 or the storage unit 308.

The program which the computer runs may be a program that processes thereof are performed in time sequence following the order described herein, or a program that the processes are performed in parallel or at a required time such as the time when a call is made.

Further, the embodiment of the invention is not limited to the above-described ones, and various changes may be made without departing from the substance of the invention.

## Claims

1. An apparatus for detecting an act of looking aside, comprising:
a field-of-view detection means for detecting a first range as a field of view of a person with respect to an orientation of a sight line of the person; and
a judging means for judging whether or not the person is looking aside, based on the detected field of view of the person.

2. The apparatus for detecting an act of looking aside of Claim 1, wherein the field-of-view detection means adjusts a breadth of the first range according to an extent of difference between a face orientation and the sight line orientation of the person.

3. The apparatus for detecting an act of looking aside of Claim 1, wherein the field-of-view detection means adjusts a breadth of the first range according to a speed of a vehicle which the person is driving.

4. The apparatus for detecting an act of looking aside of Claim 1, wherein the judging means judges that the person is looking aside regardless of the sight line orientation and field of view of the person when an orientation of a face of the person with respect to a predetermined reference direction in a horizontal direction is beyond a second range.

5. A method for detecting an act of looking aside, comprising:
a field-of-view detection step for detecting a predetermined range as a field of view of a person with respect to an orientation of a sight line of the person; and
a judging step for judging whether or not the person is looking aside, based on the detected field of view of the person.

6. A program for making a computer execute a processing comprising:
a field-of-view detection step for detecting a predetermined range as a field of view of a person with respect to an orientation of a sight line of the person; and
a judging step for judging whether or not the person is looking aside, based on the detected field of view of the person.
